# FASCICULE DE BREVET EUROPEEN

(11) **EP 3 478 377 B1**
(45) Date de publication et mention de la délivrance du brevet: **26.08.2020**
(21) Numéro de dépôt: 17745408.9
(22) Date de dépôt: 30.06.2017
(51) Int. Cl.: A63C 17/06

(54) **APPAREIL DE LOCOMOTION A ROULETTES**
FORTBEWEGUNGSVORRICHTUNG MIT ROLLEN
LOCOMOTION DEVICE WITH ROLLERS

(30) Priorité: 04.07.2016 FR 1656376
(43) Date de publication de la demande: 08.05.2019
(73) Titulaire: Commissariat à l'énergie atomique et aux énergies alternatives, 75015 Paris (FR)
(72) Inventeur: HILT, Thierry, 38660 La Terrasse (FR)
(74) Mandataire: GIE Innovation Competence Group
(86) Numéro de dépôt international: PCT/FR2017/051767
(87) Numéro de publication internationale: WO 2018/007727

(56) Documents cités:
- DE-A1- 2 906 725
- FR-A1- 2 544 621
- JP-A- 2014 076 144
- US-A- 3 827 706
- US-A- 5 397 138
- US-A1- 2002 153 205

## Description

L'invention concerne un appareil de locomotion à roulettes pour se déplacer sur un sol.

De nombreux appareils de locomotion à roulettes sont connus comme, par exemple, les patins à roulettes. Toutefois, le freinage avec des patins à roulettes ou tout autre appareil de locomotion similaire, tel que des planches à roulettes ou des skis à roulettes ou encore des trottinettes, demande une grande dextérité et nécessite de nombreuses heures de pratique avant d'être parfaitement maîtrisé. En effet, pour cela, il faut souvent arriver à faire déraper les roulettes sur le sol.

Diverses améliorations ont déjà été imaginées pour remédier à cet inconvénient. Par exemple, la demande US2002153205, notée par la suite US205, décrit un appareil de locomotion et plus précisément, des patins à roulettes. Ces patins à roulettes comportent chacun :
- une semelle s'étendant principalement dans un plan appelé « plan de la semelle » et sur laquelle au moins l'un des pieds de l'utilisateur est destiné à venir se reposer lors de l'utilisation de l'appareil par cet utilisateur,
- au moins une roulette mécaniquement raccordée à la semelle pour rouler sur le sol, cette roulette étant montée en rotation autour d'un axe de roulement parallèle au plan de la semelle et aussi autour d'un axe de pivotement perpendiculaire au plan de la semelle, et
- un dispositif de freinage apte à exercer sur la roulette un couple de freinage dont l'amplitude varie en fonction d'un angle de braquage, l'angle de braquage étant l'angle entre :
   un axe longitudinal de la semelle, cet axe longitudinal étant fixé sans aucun degré de liberté à la semelle et contenu dans le plan de la semelle, et
   la projection orthogonale, sur le plan de la semelle, de la direction instantanée de déplacement de cette semelle.

L'appareil de US205 présente plusieurs avantages dont notamment :
1. de permettre de freiner sans avoir à faire déraper la roulette, et
2. d'imiter le comportement des patins à glace ou des skis, c'est-à-dire de déclencher le freinage en mettant la semelle en biais par rapport à la direction instantanée de déplacement de l'appareil.

L'avantage n° 2 est particulièrement intéressant car il facilite grandement l'apprentissage du freinage de l'appareil de locomotion.

Plus précisément, dans l'appareil de US205, la roulette est une boule et le couple de freinage est obtenu par frottement de tampons sur cette boule. Les tampons sont placés sur un axe de roulement qui passe par le centre de la boule. Le frottement, et donc le couple de freinage, n'apparaît que si la boule roule dans une direction non colinéaire avec cet axe de roulement, c'est-à-dire si l'angle de braquage est non nul. Dans l'appareil de US205, le freinage est réalisé par un frottement entre les tampons et la boule. Avec cet appareil, il est difficile de contrôler précisément le couple de freinage en fonction de l'angle de braquage.

De l'état de la technique est également connu des documents suivants :
- JP2014076144A,
- US5397138A,
- DE2906725A1,
- FR2544621A1, et
- US3827706A.

Certains de ces documents divulguent un dispositif de freinage à câble de la roulette. Plus précisément, c'est la tension exercée sur le câble qui permet de déplacer un tampon entre une position avancée dans laquelle il exerce une pression sur la roulette pour la freiner et une position rétractée dans laquelle il n'exerce aucune pression sur la roulette. Ces dispositifs de freinage à câbles son encombrants.

L'invention vise donc à proposer un appareil de locomotion qui présente les mêmes avantages que l'appareil de US205 tout en permettant un contrôle plus précis du couple de freinage en fonction de l'angle de braquage et en ayant un encombrement limité. Elle a donc pour objet un tel appareil de locomotion conforme à la revendication 1.

L'appareil revendiqué présente les mêmes avantages que celui de US205. En effet, le fait que la roulette puisse pivoter autour de l'axe de pivotement permet de limiter, voire d'empêcher, que cette roulette dérape lors du freinage. De plus, le fait que le couple de freinage exercé soit fonction de l'amplitude de l'angle de braquage permet aussi de se rapprocher du comportement d'un patin à glace, d'un snowboard ou d'un ski.

L'utilisation d'un train épicycloïdal permet de transformer le pivotement de la roulette autour de son axe de pivotement en un déplacement du tampon tout en conservant un encombrement limité. Par exemple, par comparaison avec des dispositifs de freinage utilisant un câble tendu, pour un débattement identique du tampon, l'encombrement du train épicycloïdal est inférieur à l'encombrement du dispositif de freinage à câble. En particulier, contrairement au dispositif de freinage à câble connu, le dispositif de freinage revendiqué ne nécessite pas d'avoir un décalage important entre l'axe de roulement et l'axe de pivotement de la roulette.

Les modes de réalisation de cet appareil de locomotion peuvent comporter une ou plusieurs des caractéristiques des revendications dépendantes.

Ces modes de réalisation de l'appareil de locomotion présentent en outre les avantages suivants :
- Le fait que le tampon frotte sur le flanc latéral de la roulette rend le couple de freinage indépendant de l'usure de la bande de roulement ce qui facilite son contrôle.
- Le fait d'utiliser une chaîne ou une courroie pour entraîner en rotation la roue satellite rend le train épicycloïdal plus robuste vis-à-vis des saletés qui pourraient s'introduire entre les dents des roues. En particulier, cela rend inutile l'utilisation d'un carter pour protéger le train épicycloïdal des saletés.
- Le fait que le diamètre de la roue planétaire soit égal à deux fois le diamètre de la roue satellite permet à la roulette de tourner plusieurs fois sur elle-même autour de son axe de pivotement.
- Le fait d'interposer un ressort entre le pion et le patin permet de contrôler précisément la transformation du déplacement du pion en une pression exercée par le patin sur la roulette.
- L'utilisation d'un dispositif électro-mécanique commandable de braquage de la roulette permet de conserver la roulette alignée sur la direction instantanée de déplacement de la semelle même lorsque cette roulette ne touche plus le sol. On évite ainsi les à-coups et freinages incontrôlés qui se produisent au moment où une roulette touche à nouveau le sol après avoir été soulevée. Cela facilite donc l'usage de l'appareil de locomotion.
- L'utilisation d'une vis sans fin engrenée avec une roue crantée pour faire pivoter la roulette autour de son axe de pivotement permet de maintenir l'angle de pivotement de la roulette sans consommer ou en minimisant la consommation d'énergie électrique.

L'invention sera mieux comprise à la lecture de la description qui va suivre, donnée uniquement à titre d'exemple non limitatif et faite en se référant aux dessins sur lesquels :
- La figure 1 est une illustration schématique, en vue de côté, d'une partie d'un appareil de locomotion ;
- La figure 2 est une illustration schématique, en vue de dessus, d'une semelle de l'appareil de la figure 1 ;
- La figure 3 est une illustration schématique et en perspective d'une roulette de l'appareil de la figure 1 équipée d'un dispositif de freinage;
- La figure 4 est une illustration schématique de différents plans et axes de l'appareil de la figure 1, utilisée pour définir un angle de braquage α_{B} et un angle d'inclinaison α_{I};
- La figure 5 est une illustration schématique d'un dispositif de braquage des roulettes de l'appareil de la figure 1 ;
- La figure 6 est une illustration schématique et en vue de dessus d'une partie du dispositif de braquage de la figure 5 ;
- La figure 7 est une illustration en perspective du dispositif de freinage de la figure 3 ;
- La figure 8 est une illustration partielle, en coupe verticale, du dispositif de freinage de la figure 7 ;
- Les figures 9 et 10 sont des illustrations, en perspective et partielle, d'un tampon du dispositif de freinage de la figure 7 dans, respectivement, une position rétractée et une position avancée,
- Les figures 11 et 12 sont des illustrations, en vue de dessus, des positions, respectivement, rapprochée et éloignée d'un pion du dispositif du freinage de la figure 7 ;
- La figure 13 est un organigramme d'un procédé de fonctionnement de l'appareil de la figure 1 ;
- La figure 14 est une illustration schématique de la roulette de la figure 3, utilisée pour expliquer l'intérêt d'un déport de l'axe de roulement de cette roulette par rapport à son axe de pivotement.

Dans ces figures, les mêmes références sont utilisées pour désigner les mêmes éléments. Dans la suite de cette description, les caractéristiques et fonctions bien connues de l'homme du métier ne sont pas décrites en détail.

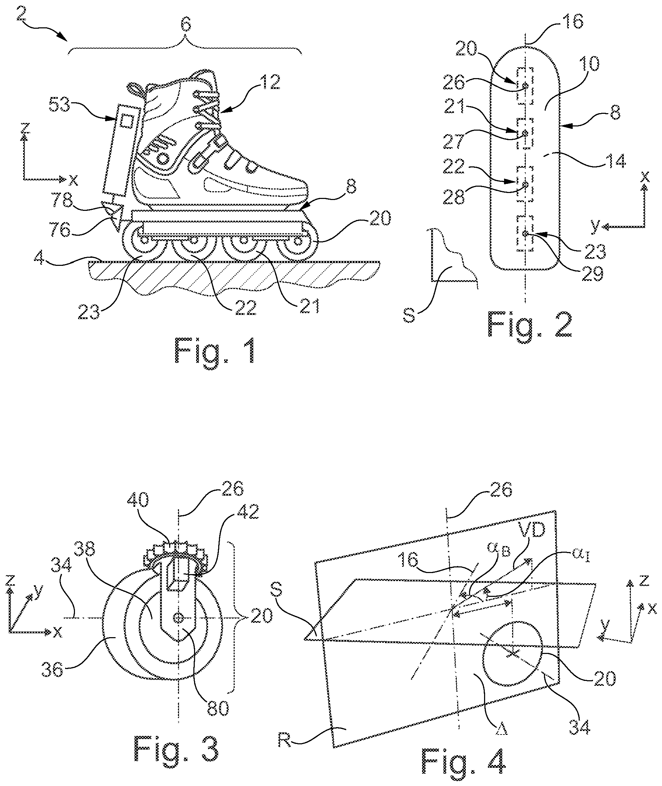

La figure 1 représente une partie d'un appareil 2 de locomotion. L'appareil 2 permet à un être humain, appelé par la suite utilisateur, de se déplacer en roulant sur un sol 4. Ici, la surface du sol 4 est plane et s'étend dans un plan horizontal appelé plan du sol. L'appareil 2 est suffisamment léger pour être directement transporté à la main par son utilisateur. Par exemple, l'appareil 2 pèse moins de 25 kg ou moins de 15 kg et, de préférence, moins de 10 kg. Son encombrement est également limité. Par exemple, son volume est inférieur à 50 cm³. Dans ce mode de réalisation, l'appareil 2 est dépourvu de moyens de propulsion, c'est-à-dire de moteur thermique ou électrique apte à propulser sur le sol 4 l'appareil 2 et son utilisateur.

A titre d'illustration, l'appareil 2 est décrit dans le cas particulier où celui-ci se compose de deux patins à roulettes. Chacun de ces patins est destiné à être chaussé sur un pied respectif de l'utilisateur. Pour simplifier la figure 1 et les figures suivantes, seul le patin droit 6 est représenté. Le patin gauche de l'appareil 2 se déduit par symétrie du patin droit.

Le patin 6 comporte une semelle 8 qui s'étend principalement dans un plan horizontal S (figure 2), appelé plan de la semelle. Sur les figures 1 et 2, ce plan S est parallèle au sol 4.

Par la suite, toutes les figures sont orientées par rapport à un repère orthogonal XYZ fixé sans aucun degré de liberté à cette semelle 8. Les directions X et Y sont contenues dans le plan S.

La semelle 8 est décrite plus en détail en référence aux figures 1 et 2. La semelle 8 est réalisée dans un matériau rigide qui se déforme très peu sous le poids de l'utilisateur. Par exemple, l'amplitude maximum de sa déformation dans la direction Z entre une situation où le poids de l'utilisateur repose sur cette semelle 8 et une situation où l'utilisateur est absent, est strictement inférieure à 10 cm et généralement inférieure à 1 cm ou 5 mm pour les applications de type patin à roulettes. La semelle 8 comporte une face supérieure 10 (figure 2) sur laquelle repose le pied droit de l'utilisateur lors de l'utilisation de l'appareil 2.

Le patin 6 comporte un dispositif d'attache 12 pour attacher le pied de l'utilisateur sur la face 10 de la semelle 8 de manière à ce que l'utilisateur puisse soulever le patin 6 en levant le pied. Dans le cas particulier représenté ici, le dispositif d'attache 12 est un chausson à l'intérieur duquel l'utilisateur peut introduire son pied. Toutefois, tout autre dispositif d'attache peut convenir comme, par exemple, des sangles ou des boucles permettant d'attacher le pied sur la face 10 de la semelle 8.

La semelle 8 comporte également une face inférieure 14 (figure 2) opposée à la face 10 et sur laquelle sont fixées des roulettes.

Typiquement, la projection orthogonale de la semelle 8 dans le plan S définit une forme qui est plus longue que large. On définit l'axe longitudinal 16 de la semelle 8 comme étant l'axe qui passe par le centre de cette projection orthogonale de la semelle 8 dans le plan S et qui est parallèle au plus grand côté du rectangle de plus petite surface qui contient entièrement cette projection orthogonale. Le centre d'un objet est ici définit comme étant le barycentre de tous les points de cet objet en affectant à chacun de ses points le même poids. Ici, la direction X du repère XYZ est parallèle à l'axe 16. L'axe transversal de la semelle 8 est un axe contenu dans le plan S et parallèle à la direction Y.

Dans ce mode de réalisation, le patin 6 comporte quatre roulettes 20 à 23. Chaque roulette est montée en rotation autour d'un axe de roulement respectif passant par son centre. Les axes de roulement sont toujours parallèles au plan S. Dans les figures 1 et 2, les roulettes 20 à 23 sont représentées dans une position particulière, appelée par la suite « position alignée ». Dans la position alignée, les axes de roulement de chacune des roulettes 20 à 23 sont tous perpendiculaires à l'axe 16. De plus, dans cette position alignée, le couple de freinage qui s'exerce sur chacune de ces roulettes est minimum et, de préférence, nul. Dans ce mode de réalisation, dans la position alignée, les roulettes 20 à 23 sont alignées les unes derrière les autres le long de l'axe 16. Les roulettes 20 et 23 sont les roulettes qui sont, respectivement, le plus en avant et le plus en arrière dans la direction X.

Chaque roulette 20 à 23 est également déplaçable en rotation autour d'un axe respectif de pivotement parallèle à la direction Z. Sur la figure 2, ces axes de pivotement des roulettes 20 à 23 portent, respectivement, les références numériques 26 à 29.

Dans ce mode de réalisation, à titre d'illustration, à l'exception de leur position les unes par rapport aux autres sous la semelle 8, ces roulettes 20 à 23 sont structurellement identiques les unes aux autres. Ainsi, seule la roulette 20 est décrite plus en détail en référence à la figure 3.

Sur la figure 3, l'axe de roulement de la roulette 20 porte la référence 34. La roulette 20 comporte une bande de roulement 36 destinée à venir directement en contact sur le sol 4 lorsque la roulette 20 roule sur ce sol 4. La bande de roulement 36 est souvent réalisée en polymère et, de préférence, dans un matériau polymère présentant un coefficient de friction important. Ici,roulette 20 présente également, de chaque côté de la bande de roulement 36, des flancs verticaux 38 qui ne viennent pas en contact directement avec le sol 4.

Dans ce mode de réalisation, l'axe 34 coupe l'axe 26 au centre de la roulette 20. Autrement dit, la distance Δ la plus courte entre l'axe 34 et l'axe 26 est nulle en permanence.

La roulette 20 comporte aussi une roue crantée 40 montée en rotation autour de l'axe 26. Plus précisément, l'axe de révolution de cette roue 40 est confondu avec l'axe 26. La roue crantée 40 est fixée sans aucun degré de liberté à l'axe 34, par l'intermédiaire d'une fourche 80, et pivote donc en même temps que cet axe 34 autour de l'axe 26.

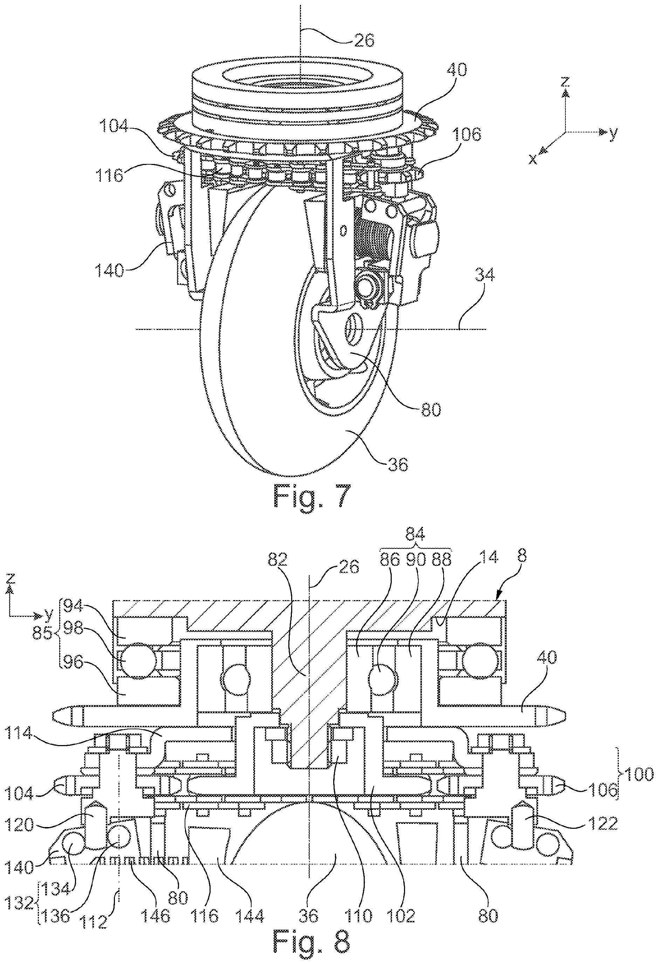

Enfin, la roulette 20 est associée à un dispositif 42 de freinage apte à freiner la roulette 20 en fonction de son angle α_{B} de braquage. Ce dispositif 42 est décrit plus en détail en référence aux figures 8 à 13.

La figure 4 est utilisée pour définir ce que l'on désigne par « angle aB de braquage » et « angle α_{I} d'inclinaison » de la semelle 8. Cette figure est représentée dans le cas particulier où la distance Δ est non nulle. Toutefois, tout ce qui est décrit dans ce cas particulier, s'applique aussi au cas où la distance Δ est nulle. Pour simplifier cette figure 4, seule la roulette 20 est schématiquement représentée par un cercle. Sur cette figure, le plan S et les axes 16, 26 et 34 correspondent au plan et axes précédemment définis. On a également représenté la direction instantanée VD de déplacement de la semelle 8 par un vecteur. L'angle α_{B} est l'angle entre l'axe 16 et la projection orthogonale de la direction VD sur le plan S. L'angle α_{I} est l'angle entre le plan S et la direction VD.

Le plan R de roulement de la roulette 20 et le plan passant par le centre de la roulette 20 est perpendiculaire à son axe 34 de roulement. Comme on le verra par la suite, le pivotement de la roulette 20 autour de son axe 26 est commandée pour maintenir en permanence le plan R parallèle à la direction VD afin d'éviter à la roulette 20 de déraper sur le sol 4 lors d'un freinage.

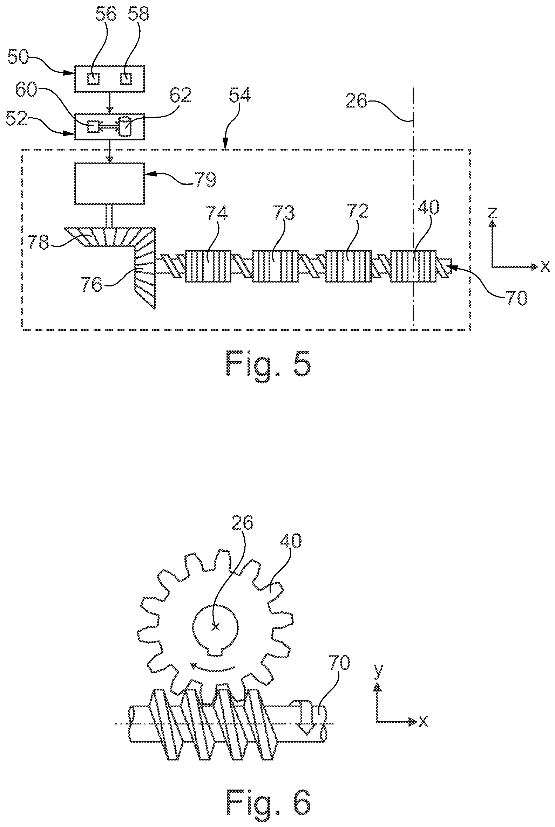

La figure 5 représente les différents éléments du patin 6 mis en œuvre pour maintenir le plan de roulement de chacune des roulettes 20 à 23 parallèle à la direction VD lors du freinage. A cet effet, le patin 6 comporte :
- une centrale inertielle 50 capable de mesurer des grandeurs physiques représentatives des angles α_{B} et α_{I}, c'est-à-dire des grandeurs physiques à partir desquelles les valeurs de ces angles α_{B} et α_{I} peuvent être déterminées,
- une unité centrale 52 qui établit à partir des mesures de la centrale inertielle 50 une commande de pivotement des roulettes 20 à 23 autour de leur axe respectif de pivotement, et
- un dispositif électro-mécanique 54 de braquage apte à faire simultanément pivoter chacune des roulettes 20 à 23 autour de leurs axes respectifs de pivotement d'un angle imposé par la commande de pivotement établie par l'unité centrale 52.

La centrale inertielle 50 est fixée sans aucun degré de liberté à la semelle 8. Typiquement, la centrale inertielle 50 comporte un gyromètre triaxe 56 et un accéléromètre triaxe 58. Le gyromètre 56 mesure la vitesse angulaire de rotation de la semelle 8 autour de trois axes non colinéaires et, avantageusement, orthogonaux entre eux. Par exemple, les axes de mesure du gyromètre 56 sont parallèles aux directions X, Y et Z. De façon similaire, les axes de mesure de l'accéléromètre 58 sont, de préférence, parallèles aux directions X, Y et Z. L'accéléromètre 58 permet de mesurer la direction VD tandis que l'intégration des mesures du gyromètre 56 permet de calculer les angles α_{B} et α_{I}.

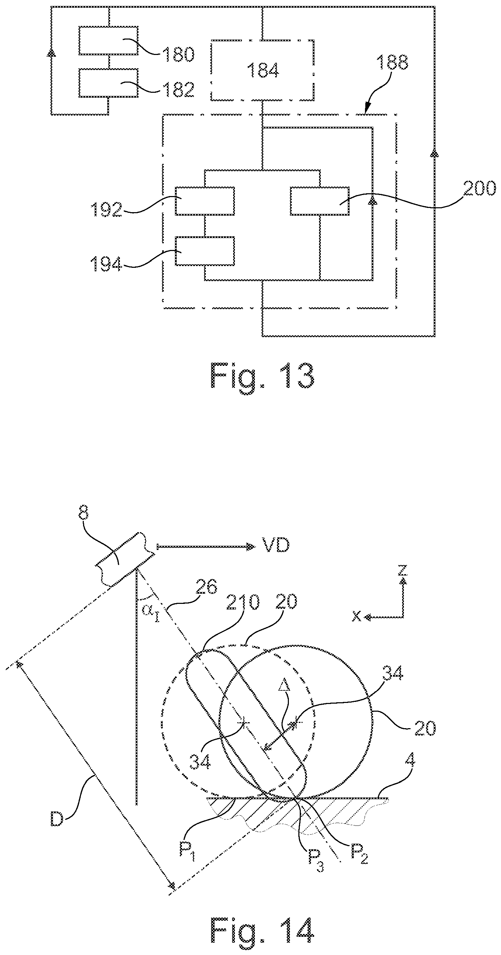

L'unité centrale 52 comporte typiquement un calculateur électronique programmable 60 apte à exécuter des instructions enregistrées sur un support d'enregistrement d'informations. Par exemple, ce calculateur est un microprocesseur programmable. A cet effet, l'unité centrale 52 comporte également une mémoire 62, telle qu'une mémoire non volatile, qui contient les instructions nécessaires pour exécuter le procédé de la figure 13.

Typiquement, la centrale inertielle 50 et l'unité centrale 52 sont logés dans un boîtier 53 (figure 1) de protection fixé sans aucun degré de liberté sur la semelle 8. Ce boîtier 53 comporte aussi une source d'alimentation pour alimenter l'ensemble des composants électriques nécessaires au fonctionnement du patin 2. Par exemple, la source d'alimentation est une batterie.

Le dispositif 54 est un dispositif électrique commandable apte à faire pivoter simultanément les roulettes 20 à 23 en réponse aux commandes de pivotement transmises par l'unité centrale 52. A cet effet, ce dispositif 54 comporte une vis sans fin 70 qui s'étend parallèlement à l'axe 16 de la semelle 8. Cette vis 70 est située sous la semelle 8 et engrène directement et simultanément chacune des roues crantées des roulettes 20 à 23. Sur la figure 6, les roues crantées des roulettes 21 à 23 portent, respectivement, les références numériques 72, 73 et 74. L'engrènement de la roue crantée 40 avec la vis 70 est représenté plus en détail sur la figure 6. La vis 70 tourne sur elle-même autour de son axe longitudinal qui s'étend parallèlement à l'axe 16.

Une roue crantée conique ou tronconique 76 est fixée sans aucun degré de liberté sur une extrémité proximale de la vis 70. L'axe de révolution de cette roue 76 est confondu avec l'axe longitudinal de la vis 70.

La roue 76 engrène directement une autre roue crantée conique ou tronconique 78 dont l'axe de révolution est perpendiculaire et parallèle à la direction Z.

Le dispositif 54 comporte aussi un actionneur électrique commandable 79 qui entraîne en rotation la roue crantée 78 autour de son axe de révolution. L'actionneur 79 est commandé par l'unité centrale 52. Par exemple, l'actionneur 79 est un moteur électrique pas à pas ou similaire.

Les figures 7 à 10 représentent plus en détail le dispositif 42 de freinage et la roulette 20.

La roulette 20 comporte la fourche 80 fixée, à son extrémité supérieure et sans degré de liberté, sur la roue crantée 40. L'axe 34 est quant à lui solidaire, sans aucun degré de liberté, de l'extrémité inférieure de la fourche 80.

La roue crantée 40 est montée libre en rotation autour de l'axe 26. À cet effet, la semelle 8 comporte un essieu vertical 82 (figure 8) qui s'étend le long de l'axe 26. Cet essieu 82 est fixé sans aucun degré de liberté sur la semelle 8 et s'étend vers le bas depuis sa face inférieure 14.

La roue crantée 40 est montée en rotation sur l'essieu 82 par l'intermédiaire de deux roulements 84, 85 à billes (figure 8). Plus précisément, le roulement 84 comporte :
- une bague intérieure 86 fixée sans aucun degré de liberté sur l'essieu 82,
- une bague extérieure 88 fixée sans aucun degré de liberté sur la roue crantée 40, et
- des billes 90 interposées entre les bagues 86 et 88.

L'axe de révolution de la bague 88 est confondu avec l'axe 26.

De part sa position, le roulement 84 transmet à la semelle 8 des efforts radiaux, c'est-à-dire principalement les efforts horizontaux appliqués sur la bande de roulement 36.

Le roulement 85 comporte :
- une bague supérieure 94 fixée sans aucun degré de liberté sur la face inférieure 14 de la semelle 8,
- une bague inférieure 96 fixée sans aucun degré de liberté sur la roue crantée 40, et
- des billes 98 interposées entre les bagues 94 et 96.

L'axe de révolution de la bague 96 est confondu avec l'axe 26.

De part sa position, le roulement 85 transmet à la semelle 8 des efforts axiaux, c'est-à-dire principalement les efforts verticaux appliqués sur la bande de roulement 36.

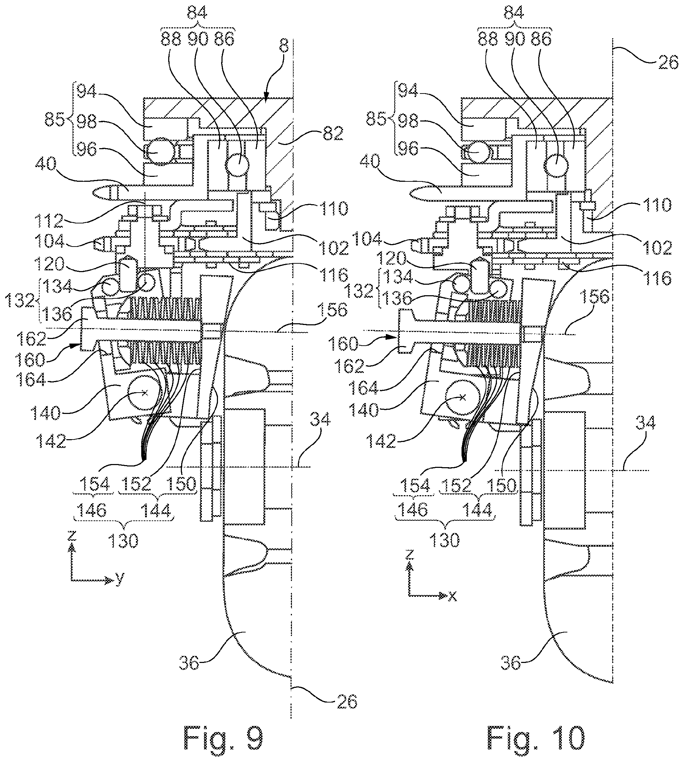

Le dispositif 42 de freinage comporte un train épicycloïdal 100 (figures 9, 11 et 12) comportant :
- une roue planétaire 102, et
- deux roues satellites 104 et 106 solidaires de la fourche 80.

Dans ce mode de réalisation, le dispositif 42 est symétrique par rapport au plan R de roulement de la roulette 20. Par conséquent, seule la partie centrale et la partie du dispositif 42 située du côté gauche du plan R sont décrites plus en détail par la suite.

L'axe de révolution de la roue planétaire 102 est confondu avec l'axe 26. Ici, la roue planétaire 102 est fixée, sans aucun degré de liberté en rotation, sur l'extrémité inférieure de l'essieu 82 à l'aide, par exemple, d'un écrou 110 vissé sur cette extrémité inférieure. Ici, la roue planétaire 102 est une roue crantée de diamètre Dₚ et comportant NDₚ dents.

La roue satellite 104 est montée libre en rotation autour d'un axe 112 mécaniquement raccordé, sans aucun degré de liberté, à la fourche 80. Par exemple, l'axe 112 est fixé à la roue crantée 40 par une équerre rigide 114. Ainsi, lorsque la roulette 20 pivote autour de l'axe 26, l'axe 112 tourne lui aussi autour de l'axe 26. Ici, l'axe 112 est parallèle à l'axe 26.

La roue satellite 104 est une roue crantée de diamètre Dₛ et comporte NDₛ dents. Ici, le diamètre Dₛ est égal à Dₚ/2 et le nombre de dents NDₛ est égal à NDₚ/2.

La roue satellite 104 est entraînée en rotation par la roue planétaire 102. À cet effet, le train épicycloïdal 100 comporte une chaîne 116 qui fait le tour de la roue planétaire 102 et des roues satellites 104 et 106. La chaîne 116 s'engrène avec les dents des roues planétaires 102 et satellites 104, 106. Ainsi, lorsque la roue 20 pivote autour de l'axe 26 d'un angle α₁, cela entraîne une rotation d'un angle α₂ de la roue satellite 104. En effet, cela provoque un déplacement des roues satellites 104 et 106 autour de la roue planétaire 102 qui demeure immobile. L'angle α₂ est proportionnel à l'angle α₁. Plus précisément, ici, à cause du rapport entre les diamètres Dₚ et Dₛ et du rapport entre le nombre de dents NDₛ et NDₚ, l'angle α₂ est égal à deux fois l'angle α₁. Ainsi, lorsque la roulette 20 pivote de 90°, les roues satellites 104 et 106 pivotent autour de leur axe de rotation respectif de 180°.

Le dispositif 42 comporte aussi un pion vertical 120 dont l'extrémité supérieure est fixée, sans aucun degré de liberté, à la roue satellite 104. Le pion 120 est excentré par rapport à l'axe 112 de sorte que lorsque la roue satellite 104 tourne d'un angle α₂ autour de l'axe 112, le pion 120 tourne du même angle α₂ autour de ce même axe 112. Le pion 120 est fixé sur la roue satellite 104 de manière à ce que, lorsque le plan R de roulement de la roulette 20 est parallèle à l'axe longitudinal 16 de la semelle, le pion 120 est dans une position éloignée. Dans cette position éloignée, le pion 120 est le plus loin possible de l'axe 26. Quand la roue satellite 104 tourne de 180°, le pion 120 se déplace de sa position éloignée jusqu'à une position rapprochée. Dans la position rapprochée, le pion 120 est le plus proche possible de l'axe 26.

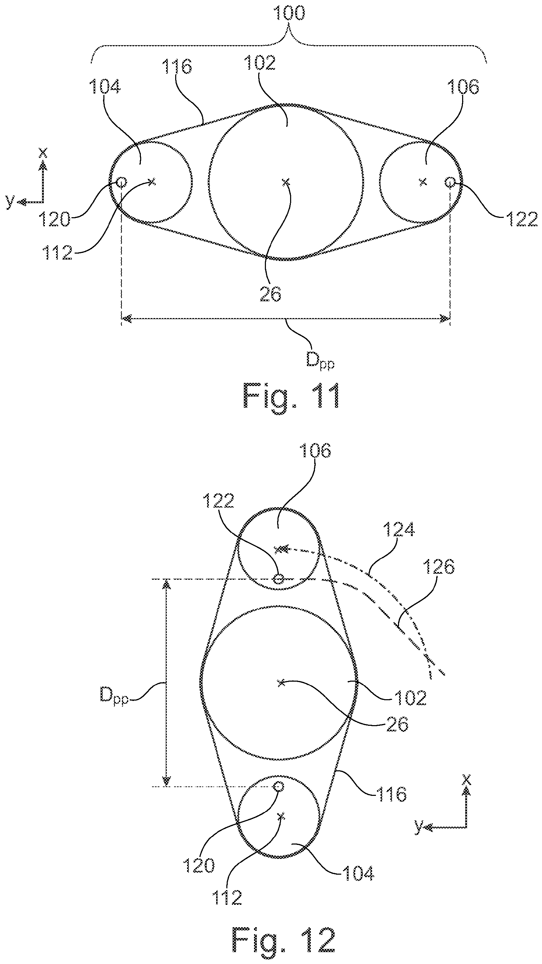

Dans les figures 8 et 11 et 12, le pion symétrique du pion 120 par rapport au plan R porte la référence numérique 122. La figure 11 représente les pions 120, 122 dans leur position éloignée. La position éloignée des pions 120, 122 correspond à la situation où le plan R de roulement de la roulette 20 est parallèle à l'axe 16 de la semelle. Dans cette situation, la distance Dₚₚ qui sépare les deux pions 120 et 122 est maximale.

Lorsque la roulette 20 pivote de 90°, les axes de révolution des roues satellites 104 et 106 pivotent également de 90° autour de l'axe 26. On obtient alors la situation représentée sur la figure 12. Dans la situation de la figure 12, le plan R de roulement est maintenant perpendiculaire à l'axe 16 de la semelle 8. Sur la figure 12, le trait 124 représente la trajectoire parcourue par l'axe de révolution de la roue satellite 106 lorsque l'on passe de la situation de la figure 11 à la situation de la figure 12. Ce pivotement de 90° de la roulette 20 entraîne une rotation de 180° des roues satellites 104 et 106 autour de leur axe respectif de révolution. Les pions 120 et 122 se retrouvent alors tous les deux dans leur position rapprochée. Dans cette position rapprochée, la distance Dₚₚ qui les sépare est alors minimale. La trajectoire parcourue par le pion 122 pour passer de la situation de la figure 11 à la situation de la figure 12 est représentée par un trait 126.

Le pion 120 déplace un tampon 130 de freinage entre une position avancée représentée sur la figure 10 et une position rétractée représentée sur la figure 9. Dans la position avancée, le tampon 130 frotte et exerce une pression sur le flanc 38 de la roue 20, ce qui la freine. Dans la position rétractée, le tampon 130 est séparé du flanc 38 de la roulette 20 par un jeu supérieur ou égal à 0,5 mm ou 1 mm. Ainsi, dans la position rétractée, le tampon 130 ne freine pas la roulette 20.

Pour faire cela, ici, l'extrémité inférieure du pion 120 est reçue, à coulissement, à l'intérieur d'une glissière 132. La glissière 132 s'étend horizontalement parallèlement au plan R. Par exemple, la glissière 132 est formée de deux rails horizontaux 134 et 136 qui s'étendent parallèlement l'un à l'autre le long d'une direction horizontale parallèle au plan R. L'extrémité inférieure du pion 120 est logée entre ces deux rails de manière à coulisser entre ces rails 134 et 136 lorsque l'on passe de la situation de la figure 11 à la situation de la figure 12 et vice-versa.

La glissière 132 est montée, sans aucun degré de liberté, sur l'extrémité supérieure d'un poussoir 140. La partie inférieure du poussoir 140 pivote autour d'un axe horizontal 142 parallèle au plan R. L'axe 142 est fixé sans aucun degré de liberté à la fourche 80.

Dans la position éloignée du pion 120 (figure 9), le poussoir 140 ramène et maintient le tampon 130 dans sa position rétractée. Dans la position rapprochée du pion 120 (figure 10), le poussoir 140 pousse et maintient le tampon 130 dans sa position avancée.

Dans ce mode de réalisation, le tampon 130 comporte un patin rigide 144 et un ressort 146. Le patin 144 comporte :
- une face avant 150 tournée vers le flanc 38 de la roulette 20, et
- une face arrière 152 située du côté opposé à la face avant 150.

La face avant 150 frotte sur le flanc 38 quand le tampon 130 est dans sa position avancée et ne frotte pas sur ce flanc 38 quand le tampon 130 est dans sa position rétractée. Lorsqu'il se déplace, le patin 144 tourne autour de l'axe 142. Pour cela, l'extrémité inférieure du patin 144 est montée libre en rotation autour de l'axe 142. Le patin 144 tourne autour de l'axe 142 indépendamment du poussoir 140.

Le ressort 146 transforme le déplacement du pion 120 vers sa position rapprochée en une pression exercée sur la face arrière 152 du patin 144. À cet effet, le ressort 146 est en appui, d'un côté, sur la face arrière 152 et, du côté opposé, sur le poussoir 140. Ici, le ressort 146 est composé d'un empilement de rondelles ressorts 154 alignées le long d'un axe horizontal 156 perpendiculaire au plan R. L'avantage d'utiliser un empilement de rondelles ressorts 154 est qu'il est alors facile de régler la raideur du ressort 146 en ajoutant ou en enlevant des rondelles ressorts 154.

Pour ramener le tampon 130 de sa position avancée vers sa position rétractée, le dispositif 42 comporte aussi une tige 160 dont une extrémité est fixée sur la face arrière 152 du patin et dont l'autre extrémité 162 est évasée. Le corps de la tige 160 est reçu à coulissement à l'intérieur d'un trou 164 traversant le poussoir 140. Ici, la tige 160 s'étend horizontalement le long de l'axe 156. Lorsque le pion 120 se déplace vers sa position éloignée, l'extrémité évasée 162 de la tige 160 vient en appui sur le poussoir 140 de sorte que la rotation du poussoir 140 ramène le tampon 130 dans sa position rétractée.

Dans ce mode de réalisation, la tige 160 est également utilisée pour maintenir les rondelles ressorts 154 empilées les unes sur les autres. À cet effet, la tige 160 traverse également le centre de chacune de ces rondelles ressorts 154.

Le fonctionnement de l'appareil 2 va maintenant être décrit en référence au procédé de la figure 13.

Initialement, l'utilisateur chausse chacun des patins puis commence à patiner pour se déplacer sur le sol 4.

A partir de ce moment, lors d'une étape 180, la centrale inertielle 50 mesure en permanence la vitesse angulaire et l'accélération de la semelle 8 autour des directions X, Y et Z puis transmet chacune de ces mesures à l'unité centrale 52.

Lors d'une étape 182, l'unité centrale 52 acquiert ces mesures pour les traiter. En particulier, l'unité centrale 52 calcule les valeurs des angles α_{I} et α_{B}. Les étapes 180 et 182 sont réitérées en permanence tant que l'appareil 2 est utilisé.

En parallèle, l'utilisateur débute par une phase 184 d'accélération ou de déplacement à vitesse constante lors de laquelle il ne souhaite pas freiner. Par exemple, l'utilisateur se déplace en effectuant ce qui est connu sous l'expression du « pas du patineur ». Lors de l'exécution du pas du patineur, à chaque fois qu'un patin roule sur le sol 4, l'axe 16 et la direction VD sont alignés. Ainsi, pendant cette phase 184, l'unité centrale 52 maintient les roulettes dans leur position alignée au moins lorsqu'elles roulent sur le sol 4. Par conséquent, lors de cette phase 184, aucun couple de freinage n'est exercé sur la roulette 20 par le dispositif 42. Les tampons 130 sont donc maintenus dans leur position rétractée.

Lorsque l'utilisateur souhaite freiner, il braque brusquement ses patins de manière à ce que l'angle aB et, éventuellement l'angle α_{I} varient brusquement. Une brusque variation de l'un de ces angles α_{B} ou α_{I} est ici interprétée par l'unité centrale 52 comme le signalement de la volonté de l'utilisateur de freiner. Dès lors, la phase 184 s'interrompt et se poursuit par une phase 188 de freinage.

Lors de la phase 188, et plus précisément lors d'une étape 192, l'unité centrale 52 établit une commande de pivotement des roulettes 20 à 23 pour maintenir leurs plans de roulement respectifs parallèles à la direction VD. Par exemple, pour cela, l'unité centrale 52 établit une commande de pivotement qui fait pivoter chacune des roulettes 20 à 23 autour de son axe de pivotement d'un angle -aB opposé à l'angle α_{B} calculé. Cette consigne de pivotement est incorporée à la commande de pivotement qui est transmise au dispositif 54 de braquage et plus précisément à son actionneur 79.

Lors d'une étape 194, en réponse, l'actionneur 79 fait tourner la roue crantée 78 d'un angle correspondant à la consigne contenue dans la commande de pivotement reçue. La rotation de la roue crantée 78 entraîne une rotation correspondante de la vis 70 par l'intermédiaire de la roue crantée 76. La rotation de la vis 70 sur elle-même entraîne en rotation, simultanément, toutes les roues crantées 40 et 72 à 74. Cela provoque donc un pivotement simultané de chaque roulette 20 à 23 autour de leurs axes respectifs de pivotement qui maintient le plan de roulement de chacune de ces roulettes parallèle à la direction VD. Dans ces conditions, la semelle 8 et plus précisément, l'axe 16 de cette semelle n'est plus parallèle à la direction dans laquelle roulent les roulettes 20 à 23.

De plus, en parallèle des étapes 192 à 194, lors d'une étape 200, à cause du pivotement de la roulette 20, le dispositif 42 freine la roulette 20 avec un couple de freinage proportionnelle à la valeur absolue de l'angle aB.

Lorsque l'utilisateur ne souhaite plus freiner, il déplace le patin 6 pour aligner à nouveau son axe longitudinal sur la direction VD et maintient la semelle 8 parallèle au sol 4. Dans ces conditions, les angles α_{B} et α_{I} s'annulent. Dès lors, l'exécution de l'étape 194 ramène les roulettes 20 à 23 dans leur position alignée. De même, l'exécution de l'étape 200 conduit à un couple de freinage nulle. Plus précisément, le dispositif 42 ramène le tampon 130 dans sa position rétractée de sorte qu'il n'exerce plus aucune pression sur la roulette 20.

La phase de freinage se termine alors et l'utilisateur retourne à la phase 184 de déplacement.

On notera que l'appareil 2 permet à l'utilisateur de freiner en « chasse-neige », c'est-à-dire en plaçant les patins dans la même position qu'il l'aurait fait pour freiner en chasse-neige avec des skis ou des patins à glace.

Dans un autre mode de réalisation, représenté schématiquement sur la figure 14, la distance Δ la plus courte entre les axes 26 et 34 est non nulle. Dans ce cas, la distance Δ est choisie pour que le point de contact entre le sol 4 et la roulette 20 soit aussi près que possible de la position du point de contact qui serait obtenu en maintenant la roulette 20 bloquée dans la position alignée.

La figure 14 représente schématiquement la roulette 20 et une partie de la semelle 8 dans une situation où la direction VD est horizontale et l'angle aB est égal à 90°. Dans cette figure, le plan de roulement de la roulette 20 est parallèle à la direction VD. La position de la roulette 20 dans le cas où la distance Δ est non nulle est représentée en trait plein. La position de la roulette 20 dans le cas où la distance Δ est nulle est représentée en trait pointillé. La position d'une roulette 210 est également représentée en trait plein par une forme oblongue. La roulette 210 est identique à la roulette 20 sauf qu'elle est bloquée en rotation autour de l'axe 26 dans la position alignée. Par conséquent, la position de la roulette 210 correspond à celle qui est observée avec un patin connu lorsque l'utilisateur incline la semelle du patin pour déraper dans la direction VD perpendiculaire à l'axe longitudinal de la semelle afin de freiner rapidement

Les points P₁ et P₂ correspondent aux positions des points de contact entre la roulette 20 et le sol 4, respectivement, dans la position représentée en pointillés et dans la position représentée en trait plein. Le point P₃ correspond à la position du point de contact entre la roulette 210 et le sol 4. Pour simplifier, en première approximation, la position du point P₃ est confondue avec l'intersection de l'axe 26 et du sol 4.

Sur la figure 14, on constate qu'une distance Δ nulle correspond à un point P₁ éloigné du point P₃ dans la direction VD. A l'inverse, dès que la distance Δ est non nulle, le point P₂ se rapproche du point P₃ dans la direction VD. Il existe même une valeur Δp de la distance Δ pour laquelle la distance entre les points P₂ et P₃ dans la direction VD est nulle comme représentée sur la figure 14. Minimiser cet écart entre les points P₂ et P₃ dans la direction VD est intéressant car cela rend l'utilisation du patin 6 plus intuitive et similaire à celle des patins connus. La valeur Δp qui annule l'écart entre les points P₂ et P₃ dans la direction VD est donnée par la relation suivante : Δp = D*sin(α_{I})/sin(α_{B}), où D est la distance entre la face inférieure 14 de la semelle 8 et le sol 4 le long de l'axe 26. Cette valeur Δp varie en fonction des valeurs des angles α_{I} et α_{B}. Toutefois, dans ce mode de réalisation, la distance Δ est constante. Ainsi, pour minimiser cet écart entre les points P₂ et P₃ dans la majorité des situations d'utilisation, la distance Δ est ici prise égale à D*sin(α_{IC})/sin(α_{BC}) à plus ou moins 20% ou plus ou moins 10% ou plus ou moins 5% près, où α_{IC} et α_{BC} sont pris égaux, respectivement à 20° et à 30°. Les valeurs α_{IC} et α_{BC} correspondent à des valeurs moyennes observées sur des patins connus lors d'un freinage par dérapage.

Typiquement, cette distance Δ est alors supérieure à 1 cm, 2 cm ou 3 cm. De préférence, lors de l'utilisation du patin 6, l'axe 34 se trouve devant l'axe 26 dans la direction de déplacement de la semelle 8. Par exemple, la distance D est égale à 90 mm, ce qui conduit à une distance Δ égale à 61,5 mm.

### Variantes de la roulette :

Un amortisseur peut être logé entre chaque roulette et la semelle pour amortir les bosses et aspérités du sol. Un tel amortisseur introduit typiquement un degré de liberté supplémentaire de déplacement de la roulette par rapport à la semelle dans la direction Z.

Il n'est pas non plus nécessaire que les roulettes soient toujours entièrement situées sous la semelle comme dans les exemples décrits précédemment. En effet, il suffit qu'au moins une partie de la bande de roulement de la roulette soit sous la semelle. L'autre partie de la bande de roulement peut dépasser au-dessus de la semelle à travers un logement prévu à cet effet dans cette semelle.

Le nombre de roulettes peut être quelconque. Par exemple en variante, l'appareil de locomotion ne comporte qu'une seule roulette ou deux roulettes ou plus.

### Variantes du dispositif de braquage :

La commande du couple de freinage en fonction de l'angle α_{I} peut être omise. Dans ce cas, le patin 6 peut être simplifié. En particulier, la mesure de l'angle α_{I} peut être omise.

La roue crantée 40 peut être remplacée par un simple secteur angulaire cranté. Dans un autre mode de réalisation, le dispositif de braquage comporte un actionneur par roulette qui entraîne directement en rotation la roulette autour de son axe de pivotement. Dans ce cas, la vis sans fin 70 et les roues crantées 40 et 72 à 74 sont omis.

En plus des roulettes dont l'angle de braquage est commandé par le dispositif de braquage, l'appareil de locomotion peut aussi comporter des roulettes libres supplémentaires. Ces roulettes libres sont montées libre en rotation autour de leurs axes de pivotement respectifs. De préférence, l'axe de roulement de ces roulettes libres est également déporté d'une distance Δ non nulle de leur axe de pivotement pour qu'elles s'alignent automatiquement sans l'aide d'actionneur électrique sur la direction instantanée de déplacement de l'appareil. Une de ces roulettes libres peut, par exemple, être utilisée pour mesurer l'angle α_{B}. Il est possible d'associer le dispositif 42 de freinage à cette roulette libre.

Dans un mode de réalisation particulier, l'appareil de locomotion comporte uniquement des roulettes libres. Dans ce cas, le dispositif 54 de braquage, la centrale inertielle 50 et l'unité centrale 52 peuvent être omis.

Dans un autre mode de réalisation, l'orientation de la roulette 20 n'est pas commandée à partir des mesures de la centrale inertielle 50. Par exemple, la centrale inertielle 50 est remplacée par un dispositif mécanique d'orientation des roulettes.

L'unité centrale 52 peut comporter un ou plusieurs calculateurs électroniques.

Dans le cas des patins décrits précédemment et dans le cas plus général où l'appareil comporte une première et une seconde semelles mécaniquement indépendantes l'une de l'autre pour recevoir chacune un pied respectif de l'utilisateur, la première unité centrale fixée sur la première semelle et la seconde unité centrale fixée sur la seconde semelle comportent, respectivement, un premier et un second émetteurs-récepteurs. Ces émetteurs-récepteurs permettent un échange de données entre les première et seconde unités centrales. Par exemple, la première unité centrale transmet à la seconde unité centrale des données sur le couple de freinage et/ou l'angle de braquage qu'elle commande. En réponse, la seconde unité centrale prend en compte les données reçues pour déterminer le couple de freinage et/ou l'angle de braquage à appliquer sur les roulettes fixées à la seconde semelle. Par exemple, grâce aux données transmises, l'écart entre les couples de freinage appliqués sur les roulettes fixées sur chacune de ces semelles est limité. Ces émetteurs-récepteurs sont typiquement des émetteurs-récepteurs sans fil tel que des émetteurs-récepteurs radiofréquence, Bluetooth ou Wifi.

L'unité centrale 52 peut être programmée différemment. Par exemple, en variante, lors de la phase 184, l'unité 52 commande le dispositifs 54 pour maintenir les roulettes 20 à 23 dans la position alignée. Dès que l'unité 52 détecte que l'utilisateur veut freiner, en réponse, elle procède immédiatement à la phase 188 lors de laquelle elle maintient le plan de roulement de chaque roulette aligné sur la direction VD et, en même temps, freine chaque roulette comme décrit précédemment. Par exemple, l'unité 52 détecte que l'utilisateur veut freiner lorsque l'angle α_{B} varie brusquement. Une brusque variation de l'angle α_{B} peut être détectée en comparant en permanence la dérivée, par rapport au temps, de l'angle α_{B} à un seuil prédéterminé SB. Tant que ce seuil SB n'est pas franchit, l'unité 52 reste dans la phase 184 où les roulettes sont maintenues dans la position alignée. Dès que ce seuil SB est franchit, l'unité 52 procède à la phase 188.

La centrale inertielle 50 peut comporter des capteurs supplémentaires comme, par exemple, un magnétomètre triaxe. Ces capteurs supplémentaires mesurent des informations supplémentaires qui sont transmises à l'unité centrale 52. L'unité centrale 52 peut utiliser ces informations supplémentaires sur le déplacement de la semelle 8 pour améliorer la détermination de l'angle α_{B} ou α_{I}. Cette unité centrale peut aussi utiliser ces informations supplémentaires pour établir des commandes de pivotement qui sont, en plus, fonction de son orientation dans le champ magnétique terrestre.

En variante, le gyromètre 56 est remplacé par un gyroscope qui mesure directement la rotation autour des directions X, Y et Z plutôt que la vitesse angulaire autour de ces directions.

La source d'alimentation du boîtier 53 peut comporter un système de récupération d'énergie permettant de générer de l'électricité pour alimenter le dispositif de braquage. Par exemple, le système de récupération d'énergie comporte des panneaux photovoltaïques ou une machine dynamométrique dont le rotor est entraîné en rotation par la rotation des roulettes autour de leur axe de roulement respectif. Le système de récupération d'énergie peut être utilisé pour alimenter directement les dispositifs de freinage et de braquage ou simplement pour recharger une batterie.

Le système de récupération d'énergie peut également exploiter d'autres sources d'énergie présentes dans le milieu ambiant où l'appareil de locomotion est utilisé comme par exemple, les vibrations des roues provoquées par des irrégularités du sol sur lequel se déplace l'appareil.

Le boîtier 53 peut être placé ailleurs que derrière le chausson 12. Par exemple, le boîtier peut être logé sur ou sous la semelle 8. Dans ce cas, le mécanisme de transmission du mouvement des actionneurs est adapté en fonction de cette nouvelle position du boîtier. En particulier, l'usage de roues crantées tronconiques peut devenir inutile selon la position du boîtier.

### Variantes du dispositif de freinage :

Un exemplaire du dispositif 42 de freinage peut être associé à une seule ou à quelques unes seulement ou à l'ensemble des roulettes 20 à 23. Par exemple, seule un exemplaire du dispositif 42 est associé aux roulettes 20 et 23 pour les freiner. Les autres roulettes 21 et 22 ne sont pas freinées et sont dépourvues de dispositif de freinage.

La chaîne 116 peut être remplacée par un autre mécanisme de transmission du mouvement entre la roue planétaire 102 et les roues satellites 104 et 106. Par exemple, dans un autre mode de réalisation, les roues planétaire et satellites sont remplacées par des poulies et la chaîne 116 est remplacée par une courroie crantée ou non. La chaîne 116 peut aussi être remplacée par des roues crantées intermédiaires.

Dans une autre variante possible, les dents des roues satellites 104, 106 sont directement en prise avec les dents de la roue planétaire 102. Dans ce cas, la chaîne 116 est omise. De préférence, dans cette variante, le train épicycloïdal est logé à l'intérieur d'un carter pour empêcher des saletés de s'introduire entre les dents des roues planétaire et satellites.

Le rapport entre les diamètres Dₛ et Dₚ peut être différent de celui décrit ci-dessus. Par exemple, dans un mode de réalisation particulier, les diamètres Dₛ et Dₚ sont égaux. Dans ce cas, le couple de freinage est maximal lorsque la roulette 20 a tourné de 180°, c'est-à-dire lorsque l'appareil se déplace en marche arrière. De façon plus générale, le rapport entre les diamètres Dₛ et Dₚ peut être être librement ajusté pour que le couple de freinage maximal intervienne pour un angle α₁ prédéterminé. Ainsi, il est aussi possible d'avoir des situations où le diamètre Dₛ est strictement supérieur au diamètre Dₚ/2 ou Dₚ ou, au contraire, strictement inférieur à Dₚ/2.

En variante, l'axe 112 de rotation de la roue satellite 104 n'est pas parallèle à celui de la roue planétaire 102. Par exemple, l'axe 112 est horizontal. Pour cela, les roues 102 et 104 sont des roues tronconiques ou coniques directement engrenées l'une dans l'autre comme décrit pour les roues 78 et 76. Dans ce cas, le pion 120 se déplace verticalement entre ses positions rapprochée et éloignée. Le tampon 130 est alors, par exemple, lui aussi déplacé verticalement entre ses positions rétractée et avancée. Par exemple, le tampon 130 se situe alors au-dessus de la roulette 20 et vient en appui sur la partie supérieure de la roulette 20 dans sa position avancée.

Le tampon 130 peut être articulé en rotation autour d'un axe de rotation différent de l'axe 142. Dans ce cas, les axes de rotation du poussoir 140 et du patin 144 sont, de préférence, tous les deux, parallèles au plan R de roulement mais pas nécessairement parallèles l'un à l'autre.

Dans une autre variante, le tampon 130 n'est pas monté en rotation autour d'un axe de rotation. Par exemple, le tampon 130 et, en particulier le patin 144, est uniquement déplacé en translation le long de l'axe 156 par des rails ou mécanismes similaires.

Le tampon 130 peut aussi être fixé sans aucun degré de liberté sur le poussoir 140. Dans ce cas, le ressort 146 et la tige 160 sont omis et le patin 144 est réalisé dans un matériau élastomère qui remplit en plus la fonction du ressort 146. Typiquement, c'est l'élasticité du matériau élastomère qui permet alors au patin de se déformer, de façon réversible, lorsque le pion 120 avance plus vers sa position rapprochée alors que la face avant du patin est déjà en appui sur le flanc 38 de la roulette 20.

En variante, le tampon 130 frotte non pas sur le flanc 38 de la roulette 20 mais directement sur la bande 36 de roulement. Par exemple, dans ce cas, le dispositif de freinage est le même que celui précédemment décrit sauf que l'axe 112 de rotation des roues satellites 104, 106 sont contenus dans le plan R de roulement de la roulette 20. De plus, les différentes pièces déplacées par chaque roue satellite 104, 106, telles que le poussoir 140 et le tampon 130 sont déplacées de 90° autour de l'axe 26. Ainsi, dans ce mode de réalisation, les tampons sont également contenus dans le plan R de roulement et, dans la position avancée, viennent directement frotter sur la bande 36 de roulement.

Dans un autre mode de réalisation, le dispositif de freinage comporte un bloc de rappel en appui d'un côté sur la fourche 80 et du côté opposé sur le tampon 130 de manière à exercer en permanence une force de rappel qui ramène le tampon 130 vers sa position rétractée. Dans ce mode de réalisation, le rail arrière 134 de la glissière 132 peut être omis si le bloc de rappel est suffisant à lui seul pour ramener automatiquement le tampon 130 de sa position avancée vers sa position rétractée.

Le pion 120 peut être raccordé à la roue satellite 104 par l'intermédiaire d'un bras dont une extrémité est fixée, sans aucun degré de liberté, à la roue satellite 104 et dont l'extrémité opposée est fixée, sans aucun degré de liberté, sur l'extrémité supérieure du pion 120. Ainsi, ce bras tourne en même temps que la roue satellite 104. Par exemple, la longueur de ce bras est supérieure au rayon de la roue satellite 104 de sorte que le pion 120 se situe au-delà de la périphérie de cette roue satellite 140. Ce bras permet alors d'accroître le débattement du pion 120 entre ses positions éloignée et rapprochée.

En variante, le dispositif 42 de freinage n'est pas symétrique par rapport au plan R de roulement. Par exemple, pour limiter son encombrement, le dispositif de freinage ne comporte qu'un seul tampon. Pour cela, la partie située à droite ou à gauche de ce plan R est omise. Dans ce cas, le train épicycloïdal 100 ne comporte alors plus que la roue planétaire 102 et qu'une seule roue satellite 104. Alternativement, le dispositif de freinage peut comporter plus de deux tampons susceptibles de venir frotter sur la même roulette.

### Autres variantes :

En variante, l'appareil de locomotion comporte un mécanisme d'ajustement de la distance Δ. Par exemple, ce mécanisme est un mécanisme à rail coulissant ou à coulisse qui permet de régler la distance Δ même en cours d'utilisation de l'appareil de locomotion. Dans ce cas, de préférence, l'appareil de locomotion comporte également un actionneur électrique commandable qui déplace le mécanisme d'ajustement en fonction d'une commande de réglage de la distance Δ générée par l'unité centrale 52. Typiquement, l'unité centrale génère, à chaque instant de commande, une commande d'ajustement qui maintient la distance Δ lors du freinage égale à la distance D*sin(α_{I})/ sin(α_{B}).

L'appareil de locomotion a été décrit ci-dessus dans le cas particulier où il s'agit de patin à roulettes. Toutefois, tout ce qui a été décrit ci-dessus s'applique à tout type d'appareil de locomotion à roulettes utilisé par un utilisateur pour se déplacer sur un sol. En particulier, ce qui a été décrit ci-dessus s'applique à des planches à roulettes, des trottinettes, des skis à roulettes ou rollers skis. Dans le cas d'une planche à roulettes ou d'une trottinettes, le dispositif de locomotion ne comporte pas de dispositif d'attache des pieds de l'utilisateur sur la semelle.

## Revendications

1. A ppareil de locomotion à roulettes pour se déplacer sur un sol, cet appareil comportant :
- une semelle (8) s'étendant principalement dans un plan appelé « plan de la semelle » et sur laquelle au moins l'un des pieds de l'utilisateur est destiné à venir se poser lors de l'utilisation de l'appareil par cet utilisateur,
- au moins une roulette (20-23) mécaniquement raccordée à la semelle pour rouler sur le sol, cette roulette étant montée en rotation autour d'un axe (34) de roulement parallèle au plan de la semelle et aussi autour d'un axe (26) de pivotement perpendiculaire au plan de la semelle,
- un dispositif (42) de freinage apte à exercer sur la roulette un couple de freinage dont l'amplitude varie en fonction d'un angle de braquage, l'angle de braquage étant l'angle entre :
• un axe (16) longitudinal de la semelle, cet axe longitudinal étant fixé sans aucun degré de liberté à la semelle et contenu dans le plan de la semelle, et
• la projection orthogonale, sur le plan de la semelle, de la direction instantanée (VD) de déplacement de cette semelle,
ce dispositif de freinage comportant :
- un tampon (130) déplaçable entre une position avancée dans laquelle il exerce une pression sur la roulette pour la freiner et une position rétractée dans laquelle il n'exerce aucune pression ou une pression plus faible sur la roulette,
- un mécanisme apte à transformer le pivotement de la roulette dans un sens autour de son axe (26) de pivotement en un déplacement du tampon de sa position rétractée vers sa position avancée et un pivotement de la roulette en sens opposé autour de son axe de pivotement en un déplacement du tampon de sa position avancée vers sa position rétractée,
**caractérisé en ce que** ce mécanisme comporte :
- un train épicycloïdal (100) comportant :
• une roue planétaire (102) fixée, sans aucun degré de liberté, à la semelle (8) et dont l'axe de révolution est confondu avec l'axe (26) de pivotement de la roulette, et
• une roue satellite (104, 106) entraînée en rotation par la roue planétaire autour d'un axe (112) de révolution fixé sans aucun degré de liberté à la roulette, et
- un pion (120, 122) déplaçable par la roue satellite entre :
• une position rapprochée dans laquelle il pousse et maintient le tampon dans sa position avancée, et
• une position éloignée dans laquelle il autorise le déplacement du tampon de sa position avancée vers sa position rétractée.

2. Appareil selon la revendication 1, dans lequel :
- la roulette (20) comporte :
• une bande (36) de roulement destinée à venir directement en contact sur le sol lorsque la roulette roule sur ce sol, et
• des flancs latéraux (38) qui s'étendent principalement perpendiculairement à la bande de roulement, et
- le tampon (130) est disposé en vis-à-vis d'un de ces flancs latéraux de manière exercer, dans la position avancée, la pression sur ce flanc latéral.

3. Appareil selon l'une quelconque des revendications précédentes, dans lequel le train épicycloïdal (100) comporte une courroie ou une chaîne (116) qui relie mécaniquement la roue planétaire (102) à la roue satellite (104, 106) pour entraîner en rotation la roue satellite autour de son axe de révolution en réponse à un pivotement de la roulette (20) autour de son axe de pivotement.

4. Appareil selon l'une quelconque des revendications précédentes, dans lequel le diamètre de la roue planétaire (102) est égal à deux fois le diamètre de la roue satellite (104, 106).

5. Appareil selon l'une quelconque des revendications précédentes, dans lequel le tampon comporte :
- un patin (144) présentant une face avant (150) apte à frotter directement sur la roulette lorsque le tampon est dans sa position avancée, et une face arrière (152) située du côté opposé à la face avant, et
- un ressort (146) interposé entre le pion (120, 122) et la face arrière du patin pour transformer le déplacement du pion en une pression exercée par la face avant du patin sur la roulette.

6. Appareil selon l'une quelconque des revendications précédentes, dans lequel l'appareil comporte en plus:
- un dispositif (54) électro-mécanique commandable de braquage de la roulette, ce dispositif étant apte à faire pivoter la roulette autour de son axe de pivotement d'un angle qui est déterminé à partir d'une commande de pivotement reçue,
- une centrale inertielle (50) apte à mesurer une grandeur physique représentative de l'angle de braquage, et
- une unité centrale (52) programmée pour établir, à chaque instant de commande du pivotement de la roulette et en fonction de la grandeur physique mesurée par la centrale inertielle à cet instant, une commande de pivotement qui maintient l'axe de roulement de la roulette perpendiculaire à la direction instantanée de déplacement de la semelle.

7. Appareil selon la revendication 6, dans lequel le dispositif de braquage comporte :
- une roue crantée (40, 72-74) fixée sans aucun degré de liberté à la roulette et montée en rotation autour de l'axe (26) de pivotement de cette roulette,
- une vis sans fin (70) engrenée avec la roue crantée et s'étendant parallèlement au plan de la semelle, et
- un actionneur électrique (79) apte à faire tourner la vis sans fin d'un nombre de tours déterminé à partir de la commande de pivotement reçue pour faire pivoter la roulette d'un angle correspondant autour de son axe de pivotement.

8. Appareil selon l'une quelconque des revendications précédentes, dans lequel l'appareil de locomotion est directement transportable à la main par son utilisateur.

9. Appareil selon l'une quelconque des revendications précédentes, dans lequel l'appareil comporte :
- deux semelles mécaniquement indépendantes l'une de l'autre, un pied respectif de l'utilisateur étant destiné à venir se poser, lors de l'utilisation de l'appareil par cet utilisateur, sur chacune de ces semelles,
- fixés sur chaque semelle, au moins un exemplaire de ladite au moins une roulette et un exemplaire du dispositif (42) de freinage.

## Patentansprüche

1. Fortbewegungsvorrichtung mit Rollen, um sich auf einem Boden zu bewegen, wobei diese Vorrichtung Folgendes umfasst:
- eine Sohle (8), die sich im Wesentlichen in einer Ebene, die als "Sohlenebene" bezeichnet wird, erstreckt und auf der mindestens einer der Füße des Benutzers während der Benutzung der Vorrichtung durch diesen Benutzer zu liegen kommen soll,
- mindestens eine Rolle (20-23), die mechanisch mit der Sohle verbunden ist, um auf dem Boden zu rollen, wobei diese Rolle um eine Rollachse (34), die zu der Sohlenebene parallel ist, und auch um eine Schwenkachse (26), die zu der Sohlenebene senkrecht ist, drehbar angebracht ist,
- eine Bremsvorrichtung (42), die fähig ist, ein Bremsmoment, dessen Amplitude in Abhängigkeit von einem Lenkwinkel variiert, auf die Rolle auszuüben, wobei der Lenkwinkel der Winkel zwischen Folgendem ist:
• einer Längsachse (16) der Sohle, wobei diese Längsachse ohne jeglichen Freiheitsgrad mit der Sohle verbunden und in der Sohlenebene enthalten ist, und
• der orthogonalen Projektion der momentanen Bewegungsrichtung (VD) dieser Sohle auf die Sohlenebene,
wobei diese Bremsvorrichtung Folgendes umfasst:
- einen Stempel (130), der zwischen einer vorgerückten Stellung, in der er einen Druck auf die Rolle ausübt, um diese zu bremsen, und einer zurückgezogenen Stellung, in der er keinerlei Druck oder einen geringeren Druck auf die Rolle ausübt, bewegbar ist,
- einen Mechanismus, der fähig ist, das Schwenken der Rolle in einer Richtung um ihre Schwenkachse (26) in eine Bewegung des Stempels von seiner zurückgezogenen Stellung in seine vorgerückte Stellung und ein Schwenken der Rolle in einer entgegengesetzten Richtung um ihre Schwenkachse in eine Bewegung des Stempels von seiner vorgerückten Stellung in seine zurückgezogene Stellung umzuwandeln,
**dadurch gekennzeichnet, dass** dieser Mechanismus Folgendes umfasst:
- ein Planetengetriebe (100), das Folgendes umfasst:
• ein Sonnenrad (102), das ohne jeglichen Freiheitsgrad mit der Sohle (8) verbunden ist und dessen Drehachse mit der Schwenkachse (26) der Rolle zusammenfällt, und
• ein Satellitenrad (104, 106), das durch das Sonnenrad um eine Drehachse (112), die ohne jeglichen Freiheitsgrad mit der Rolle verbunden ist, rotierend angetrieben wird, und
- einen Stift (120, 122), der durch das Satellitenrad zwischen Folgendem bewegbar ist:
• einer angenäherten Stellung, in der er den Stempel in seine vorgerückte Stellung drückt und in dieser hält, und
• einer entfernten Stellung, in der er die Bewegung des Stempels von seiner vorgerückten Stellung in seine zurückgezogene Stellung gestattet.

2. Vorrichtung nach Anspruch 1, wobei:
- die Rolle (20) Folgendes umfasst:
• eine Rollfläche (36), die dazu bestimmt ist, direkt mit dem Boden in Kontakt zu kommen, wenn die Rolle auf diesem Boden rollt, und
• Seitenflanken (38), die sich im Wesentlichen senkrecht zur der Rollfläche erstrecken, und
- der Stempel (130) gegenüber einer dieser Seitenflanken angeordnet ist, um in der vorgerückten Stellung den Druck auf diese Seitenflanke auszuüben.

3. Vorrichtung nach einem der vorhergehenden Ansprüche, wobei das Planetengetriebe (100) einen Riemen oder eine Kette (116) umfasst, der/die das Sonnenrad (102) mechanisch mit dem Satellitenrad (104, 106) verbindet, um das Satellitenrad als Reaktion auf ein Schwenken der Rolle (20) um ihre Schwenkachse rotierend um seine Drehachse anzutreiben.

4. Vorrichtung nach einem der vorhergehenden Ansprüche, wobei der Durchmesser des Sonnenrads (102) gleich dem Zweifachen des Durchmessers des Satellitenrads (104, 106) ist.

5. Vorrichtung nach einem der vorhergehenden Ansprüche, wobei der Stempel Folgendes umfasst:
- eine Kufe (144), die eine Vorderseite (150), die fähig ist, direkt an der Rolle zu reiben, wenn sich der Stempel in seiner vorgerückten Stellung befindet, und eine Rückseite (152), die sich gegenüber der Vorderseite befindet, aufweist, und
- eine Feder (146), die zwischen dem Stift (120, 122) und der Rückseite der Kufe eingefügt ist, um die Bewegung des Stifts in einen Druck, der durch die Vorderseite der Kufe auf die Rolle ausgeübt wird, umzuwandeln.

6. Vorrichtung nach einem der vorhergehenden Ansprüche, wobei die Vorrichtung ferner Folgendes umfasst:
- eine elektromechanische steuerbare Lenkvorrichtung (54) der Rolle, wobei diese Vorrichtung fähig ist, die Rolle um einen Winkel, der auf Grundlage eines empfangenen Schwenkbefehls bestimmt wird, um ihre Schwenkachse zu schwenken,
- eine inertiale Messeinheit (50), die fähig ist, eine physikalische Größe, die für den Lenkwinkel repräsentativ ist, zu messen, und
- eine Zentraleinheit (52), die dazu programmiert ist, zu jedem Zeitpunkt eines Befehls zum Schwenken der Rolle und in Abhängigkeit von der durch die inertiale Messeinheit zu diesem Zeitpunkt gemessenen physikalischen Größe einen Schwenkbefehl zu erstellen, der die Rollachse der Rolle senkrecht zu der momentanen Bewegungsrichtung der Sohle hält.

7. Vorrichtung nach Anspruch 6, wobei die Lenkvorrichtung Folgendes umfasst:
- ein Zahnrad (40, 72-74), das ohne jeglichen Freiheitsgrad mit der Rolle verbunden ist und um die Schwenkachse (26) dieser Rolle drehbar angebracht ist,
- eine Schnecke (70) die mit dem Zahnrad verzahnt ist und sich parallel zu der Sohlenebene erstreckt, und
- ein elektrisches Stellglied (79), das fähig ist, die Schnecke auf Grundlage des empfangenen Schwenkbefehls eine bestimmte Anzahl von Umdrehungen zu drehen, um die Rolle um einen entsprechenden Winkel um ihre Schwenkachse zu schwenken.

8. Vorrichtung nach einem der vorhergehenden Ansprüche, wobei die Fortbewegungsvorrichtung durch ihren Benutzer direkt von Hand transportiert werden kann.

9. Vorrichtung nach einem der vorhergehenden Ansprüche, wobei die Vorrichtung Folgendes umfasst:
- zwei mechanisch voneinander unabhängige Sohlen, wobei ein jeweiliger Fuß des Benutzers während der Benutzung der Vorrichtung durch diesen Benutzer auf jeweils einer dieser Sohlen zu liegen kommen soll,
- verbunden mit jeder Sohle, mindestens ein Exemplar der mindestens einen Rolle und ein Exemplar der Bremsvorrichtung (42).

## Claims

1. Locomotion device with rollers for travel on a ground, this device comprising:
- a sole (8) which extends mainly on a plane known as the "sole plane", and on which at least one of the feet of the user is designed to be supported during use of the device by this user;
- at least one roller (20-23) which is mechanically connected to the sole in order to roll on the ground, this roller being fitted such as to rotate around a rolling axis (34) parallel to the plane of the sole, and also around an axis of pivoting (26) perpendicular to the plane of the sole;
- a braking device (42) which can exert a braking torque on the roller, the amplitude of which varies according to a turning angle, the turning angle being the angle between:
• a longitudinal axis (16) of the sole, this longitudinal axis being set without any degree of freedom for the sole, and contained on the plane of the sole; and
• the orthogonal projection, on the plane of the sole, of the instantaneous direction of displacement (VD) of this sole,
this braking device comprising:
- a pad (130) which can be displaced between an advanced position, in which it exerts pressure on the roller in order to brake it, and a retracted position, in which it does not exert any pressure on the roller, or exerts lower pressure on it;
- a mechanism which can transform the pivoting of the roller in a direction around its axis of pivoting (26) into displacement of the pad from its retracted position to its advanced position, and pivoting of the roller in the opposite direction around its axis of pivoting into displacement of the pad from its advanced position to its retracted position,
**characterized in that** this mechanism comprises:
- a planetary gear set (100) comprising:
• a planetary wheel (102) which is secured without any degree of freedom on the sole (8), and the axis of revolution of which coincides with the axis of pivoting (26) of the roller; and
• a satellite gear (104, 106) which is rotated by the planetary wheel around a rotational shaft (112) which is secured without any degree of freedom on the roller; and
- a pin (120, 122) which can be displaced by the satellite gear between:
• a close position in which it thrusts the pad and retains it in its advanced position; and
• a distant position in which it permits displacement of the pad from its advanced position to its retracted position.

2. Device according to Claim 1, wherein:
- the roller (20) comprises:
• a tread (36) which is designed to come directly into contact on the ground when the roller is rolling on this ground; and
• lateral flanks (38) which extend mainly perpendicularly to the tread; and
- the pad (130) is disposed opposite one of these lateral flanks, such as to exert the pressure on this lateral flank in the advanced position.

3. Device according to either of the preceding claims, wherein the planetary gear set (100) comprises a belt or a chain (116) which connects the planetary wheel (102) mechanically to the satellite gear (104, 106), in order to rotate the satellite gear around its axis of revolution in response to pivoting of the roller (20) around its axis of pivoting.

4. Device according to any one of the preceding claims, wherein the diameter of the planetary wheel (102) is equal to twice the diameter of the satellite gear (104, 106).

5. Device according to any one of the preceding claims, wherein the pad comprises:
- a runner (144) with a front face (150) which can rub directly on the roller when the pad is in its advanced position, and a rear face (152) situated on the side opposite the front face; and
- a spring (146) interposed between the pin (120, 122) and the rear face of the runner, in order to transform the displacement of the pin into pressure exerted by the front face of the runner on the roller.

6. Device according to any one of the preceding claims, wherein the device additionally comprises:
- a controllable electromechanical device (54) for turning of the roller, this device being able to make the roller pivot around its axis of pivoting by an angle which is determined on the basis of a pivoting command received;
- an inertia system (50) which can measure a physical value representative of the turning angle; and
- a central unit (52) which is programmed, at each instant of the command for pivoting of the roller, and in accordance with the physical value measured by the inertia system at that instant, to establish a pivoting command which maintains the rolling axis of the roller perpendicular to the instantaneous direction of displacement of the sole.

7. Device according to Claim 6, wherein the turning device comprises:
- a notched wheel (40, 72-74) which is secured without any degree of freedom on the roller, and is fitted such as to rotate around the axis of pivoting (26) of this roller;
- an endless screw (70) which is engaged with the notched wheel, and extends parallel to the plane of the sole; and
- an electrical actuator (79) which can make the endless screw turn by a number of turns determined on the basis of the pivoting command received in order to make the roller pivot by a corresponding angle around its axis of pivoting.

8. Device according to any one of the preceding claims, wherein the locomotion device can be transported directly by hand by its user.

9. Device according to any one of the preceding claims, wherein the device comprises:
- two soles which are mechanically independent from one another, a respective foot of the user being designed to be placed by this user on each of these soles during use of the device;
- secured on each sole, at least one specimen of said at least one roller and a specimen of the braking device (42).
